(19) Europäisches Patentamt
European Patent Office
Office européen des brevets

(11) **EP 4 517 597 A1**

(12) **EUROPEAN PATENT APPLICATION**

(43) Date of publication:
**05.03.2025 Bulletin 2025/10**

(21) Application number: **23193952.1**

(22) Date of filing: **29.08.2023**

(51) International Patent Classification (IPC):
*G06N 3/09* (2023.01)    *G06N 20/00* (2019.01)

(52) Cooperative Patent Classification (CPC):
**G06N 3/09; G06N 20/00;** G06N 3/0442

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Aktiengesellschaft**
**80333 München (DE)**

(72) Inventor: **Lebacher, Michael**
**84513 Töging am Inn (DE)**

(74) Representative: **Siemens Patent Attorneys**
**Postfach 22 16 34**
**80506 München (DE)**

(54) **MONITORING A PERFORMANCE OF AN AI BASED ANALYSIS MODEL**

(57)    Computer- implemented method for monitoring a performance of an AI based analysis model, comprising the steps of
- receiving (S1) at least one collected datapoint (xi) comprising multivariate sensor data collected at the machine (10) or at a product of the machine (10) or an environment of the machine (10), each collected datapoint (xi) is structured as a multi-dimensional vector and each element of the vector representing a feature of the machine (10) or a feature of a product of the machine (10) or a feature of environment of the machine (10),
- determining (S2) an analysis result with respect to an analysis task by processing the collected datapoint (xi) by the analysis model (f),
- estimating (S3) the performance of the analysis model (f) at the collected datapoint (xi) and a feature attribution of each of the features of the collected datapoint (xi) to the performance of the analysis model (f) by an explanation model (e), wherein the explanation model (e) comprises a set of loss function trained for the analysis model (f),
- outputting (S4) the estimated performance (pi) of the analysis model (f) and the feature attribution (pir) of each of the features of the collected datapoint (xi) to the performance of the analysis model (f).

## FIG 1

```
┌──────────────┐
│   IN xi      │──  S1
└──────┬───────┘
       ↓
┌──────────────┐
│   f(xi)      │──  S2
└──────┬───────┘
       ↓
┌──────────────┐
│   e(f, xi)   │──  S3
└──────┬───────┘
       ↓
┌──────────────┐
│  OUT pi, pir │──  S4
└──────────────┘
```

EP 4 517 597 A1

**Description**

The present disclosure relates to a computer-implemented method for monitoring a performance of an AI based analysis model, a respective monitoring apparatus, a computer-implemented method for training an explanation model which estimates a performance of an analysis model a respective apparatus, a respective training apparatus and respective computer program products.

Nowadays, sensors are omnipresent in all kinds of heavy machinery, in devices of manufacturing plants, in vehicles for controlling and monitoring autonomous driving. Data-driven applications using machine learning models process such sensor data and output an estimation of the state of the machine, device or observed environment.

One important application field of sensors is monitoring the functionality of heavy machinery such as pumps, turbines, die casting machines etc. To do so, sensors are installed on these devices and machines and measure different physical parameters such as electrical current, temperature, pressure, position and furthermore which enables monitoring of the state of the entire system. Sensor data sampled over time enables continuous monitoring. If the machinery is subject to different damages, the sensor data values typically show unusual, suspicious patterns and anomalies in the data. The data can be analyzed by machine learning models also known as AI-based models which are trained to detect these anomalies.

Sensor data, including image data, are also used for quality monitoring of products manufactured by a manufacturing device, like a robot or an additive manufacturing machine in a manufacturing plant. Data collected by sensors and other devices, that allow collecting data relating to the operation of one or several machines in a production line, are input to all kinds of Machine Learning and AI techniques performing, e.g., a classification task and/or a regression task, are used for anomaly prediction and predictive maintenance of the machine or production line. Image data is processed in machine learning models performing image classification tasks for quality monitoring or object detection for controlling autonomous movement or driving. Further, regression tasks are applied for sensor fusion and prediction.

Most often machine learning models are not transparent in their operation but opaque and, even more severely, show varying degrees of local performance dependent on the input data which often is not noticed during development of the ML model and/or during application of the ML model. If a varying degree of the performance is detected, it often cannot be attributed to the input data. I.e., one or more components of the input parameter cannot be identified which cause the varying performance of the ML model.

There exist different approaches to estimate the performance of an ML model. E.g., label-free performance estimation allows to quantify the impact of covariate shift and label shifts on the performance of a deployed machine learning model. Given some assumptions, it is possible to employ them during deployment for monitoring reasons. However, they typically do not decompose the loss according to the feature attributions. SAGE (Shapely Global ImportancE) framework by Ian Covert (Ian Covert, Scott Lundberg, Su-In Lee. "Understanding Global Feature Contributions With Additive Importance Measures." NeurIPS 2020) proposes to use the methodology of Shapely Values to define globally for the whole model the contribution of individual input features to the model performance. This allows, to say which features contribute positively and which features contribute negatively to the performance. However, the approach suffers from two problems. First it is computationally highly inefficient, and it is focused on global evaluation, but not locally at a considered datapoint.

Therefore, it is the object of the present application to provide a reliable and processing efficient method to quantify the performance of a ML model and to identify those features of the input data which cause the varying performance.

This object is solved by the features of the independent claims. The dependent claims contain further developments of the invention.

A first aspect concerns a computer-implemented method for monitoring a performance of an AI based analysis model, comprising:

- receiving at least one collected datapoint comprising multivariate sensor data collected at the machine or at a product of the machine or an environment of the machine each collected datapoint is structured as a multi-dimensional vector and each element of the vector representing a feature of a machine or a feature of a product of the machine or a feature of environment of the machine,
- determining an analysis result with respect to an analysis task by processing the collected datapoint by the analysis model,
- estimating the performance of the analysis model at the collected datapoint and a feature attribution of each of the features of the collected datapoint to the performance of the analysis model by an explanation model, wherein the explanation model comprises a set of loss function trained for the analysis model,
- outputting the estimated performance of the analysis model and the feature attribution of each of the features of the collected datapoint to the performance of the analysis model.

The analysis model is applied to analyze a machine or to analyze a product of the machine or to analyze an environment of the machine. Advantageously, the applied explanation model is model-agnostic, i.e., it estimates the performance and feature attribution to the performance of any standard AI and ML algorithms. The explanation model determines a share of the loss of performance, which is contributed by each of the features, i.e., by each element of the multi-dimensional vector structured collected datapoint. The output provides a hint to the one or several features of the machine which causes the performance degradation.

In an embodiment of the method, each loss function out of the set of loss functions estimates the performance and feature attribution of the analysis model at a different subset of collected datapoints.

The single loss functions of the set of loss functions can be trained in parallel resulting in a time-efficient training of the explanation model. The training of a single loss function is less complex and thus requires less processing capacity than training the explanation model in one piece.

In an embodiment of the method, each of the trained loss functions is an additively or multiplicatively decomposable loss function.

Examples of such loss functions are a mean squared error function, or a cross-entropy loss function, and the like. Their structure allows a separation of the performance contribution per feature. Such loss functions are well known and exists for each "standard" machine learning problem, e.g., for each classification task or regression task. Therefore, the method can be applied to any type of model, i.e., it is model-agnostic.

In an embodiment of the method, a linear regression model approximates individual loss contributions with a weighted linear combination of the features of an input datapoint, and results of the linear regression model contribute to the additive loss function.

The linear regression model describes the components of the loss function. Processing such a linear regression model is known and can be processed with few efforts by standard SW algorithms.

In an embodiment of the method, each of the loss functions is trained to quantify the correspondence between the analysis result predicted by the analysis model for a set of training datapoints and actual labels indicating the condition of the machine at the set of training datapoints.

Advantageously, the explanation model provides the performance and feature attribution for any supervised analysis model. Thus, the method is applicable for a wide range of analysis models.

In an embodiment of the method, an alarm message is generated if the performance of the analysis model is above a predefined threshold.

This allows a short-term notification of a changing performance and fast reaction to analyze and resolve the feature causing the performance degradation. As the performance is provided in terms of the loss, the grade of performance deteriorates with increasing performance values.

In an embodiment of the method, at least one feature having a high feature attribution is determined out of the output feature attribution of each of the features of the collected datapoint and the at least one determined feature is output for calibration of the sensor collecting the determined feature.

Advantageously, the method shortens the time to identify the features contributing most to the degradation of the performance of the analysis model. The at least one sensor which recorded the at least one most contributing feature can be analyzed and calibrated. Further on, the means for pre-processing recorded data can be analyzed and adjusted.

In an embodiment of the method, at least one feature having a high feature attribution is determined out of the output feature attributions of each of the features of the collected datapoint and output for indicating a re-training of the analysis model.

This allows a re-training of the analysis model focused to those features contributing mainly to the performance degradation. This provides a time efficient and problem-solving efficient re-training of the analysis model. The actually used analysis model is substituted by the re-trained analysis model for performing the classification or regression task.

A second aspect concerns a computer-implemented method for training an explanation model which estimates a performance of an analysis model, comprising the steps of

- receiving a set of labelled training data, each labelled training data comprising a training datapoint and a label assigned to the training data point and the analysis model,
- determining, for each of the training datapoints, an analysis result by processing the training datapoints by the analysis model,
- calculating, for each of the training datapoints, all loss attributions for each feature of the training datapoint by inputting the determined analysis result and the label of the training datapoint in a loss function,
- building a pair, for each of the training datapoints, comprising the calculated loss attributions of the training datapoint and the respecting training datapoint,
- ordering the pairs according to ascending values of the loss attribution in an ordered set of pairs,
- dividing the ordered set of pairs into subsets of pairs, wherein all loss attributions contained in an actual subset are smaller than the loss attributions contained in the subsequent subset,

- training a loss function for each subset of pairs on the training datapoints and loss contributions contained in the subset of pairs, and
- outputting the trained explanation model comprising the trained loss functions for each subset of pairs.

The method trains an explanation model in a time-effective and processing capacity effective way which provides reliable information on the performance of the analysis model and contribution of each of the features to the performance of the analysis model.

In an embodiment, each of the loss functions is an additively or multiplicatively decomposable loss function, and/or results of a linear regression model contribute to the loss function, and the linear regression model approximates individual loss contributions with a weighted linear combination of the features of an input training datapoint.

In an embodiment, each subset of pairs comprises at least more pairs than the number of features of the training data point.

Thus, the number of pairs in the subsets can be adapted to the processing capacities available for training of each regression model.

A third aspect concerns a monitoring apparatus for monitoring a performance of an AI based analysis model, comprising:

- an input interface configured to receive at least one collected datapoint comprising multivariate sensor data collected at the machine or at a product of the machine, each collected datapoint is structured as a multi-dimensional vector and each element of the vector representing a feature of the machine or a feature of a product of the machine or a feature of environment of the machine,
- an analysis unit configured to determine an analysis result with respect to an analysis task by processing the collected datapoint by the analysis model,
- a performance estimation unit configured to estimate the performance of the analysis model at the collected datapoint and a feature attribution of each of the features of the collected datapoint to the performance of the analysis model by an explanation model, wherein the explanation model comprises a set of loss function trained for the analysis model, and
- an output interface configured to output the estimated performance of the analysis model and the feature attribution of each of the features of the collected datapoint to the performance of the analysis model.

A fourth aspect concerns a training apparatus for training an explanation model which estimates a performance of an analysis model, comprising:

- an input interface configured to receive a set of labelled training data, each labelled training data comprising a training datapoint and a label assigned to the training data point and the analysis model,
- an analysis unit configured to determine, for each of the training datapoints, an analysis result by processing the training datapoints by the analysis model,
- a processing unit configured to calculate, for each of the training datapoints, all loss attributions for each feature of the training datapoint by inputting the determined analysis result and the label of the training datapoint in a loss function,

  to build a pair, for each of the training datapoints, comprising the calculated loss attributions of the training datapoint and the respecting training datapoint,
  to order the pairs according to ascending values of the loss attribution in an ordered set of pairs,
  to divide the ordered set of pairs into subsets of pairs, wherein all loss attributions contained in an actual subset (Bq) are smaller than the loss attributions contained in the subsequent subset (Bq+1),
  a training unit configured to train a loss function for each subset of pairs on the training datapoints and loss contributions contained in the subset of pairs, and
  an output interface configured to output the trained explanation model comprising the trained loss functions for each subset of pairs.

A fifth aspect concerns a computer program product directly loadable into the internal memory of a digital computer, comprising software code portions for performing the steps of the method for monitoring a performance of an analysis model, as described above, when said product is run on said digital computer.

A sixth aspect concerns a computer program product directly loadable into the internal memory of a digital computer, comprising software code portions for performing the steps of the method for training an explanation model, as described above, when said product is run on said digital computer.

It is to be understood that the claimed computer program products also comprise a computer readable medium, which is directly loadable into a memory of the digital computer, comprising program code sections which are suitable for executing the steps of the mentioned method.

Various kinds and types of machines can be considered. Examples include, e.g., factory equipment, e.g., manufacturing apparatuses, robots, or assembly line devices. Further examples include machines applied in power plants or transmission networks, e.g., turbines or generators, substation equipment. Examples include machines applied in mobility infrastructure equipment, e.g., people mover, automated escalators, lifts, etc. Further examples include heavy machinery such as pumps, turbines, die casting machines, etc. Further examples include vehicles, e.g., cars, locomotives, airplanes, or ships.

The invention will be explained in more detail by reference to accompanying figures. Similar objects will be marked by the same reference signs.

Figure 1     illustrates an embodiment of the inventive computer-implemented method for monitoring a performance of an analysis model by a flow diagram.

Figure 2     schematically illustrates an embodiment of determining the performance of the analysis model at a collected datapoint.

Figure 3     schematically illustrates an embodiment of the respective monitoring apparatus.

Figure 4     illustrates an embodiment of the inventive computer-implemented method for training an explanation model which estimates a performance of the analysis model, by a flow diagram.

Figure 5     schematically illustrates an embodiment of the inventive training apparatus.

It is noted that in the following detailed description of embodiments, the accompanying drawings are only schematic, and the illustrated elements are not necessarily shown to scale. Rather, the drawings are intended to illustrate functions and the co-operation of functions. Here, it is to be understood that any connection or coupling of functional blocks, devices, components or other physical or functional elements could also be implemented by an indirect connection or coupling, e.g., via one or more intermediate elements. A connection or a coupling of elements or components or nodes can for example be implemented by a wire-based, a wireless connection and/or a combination of a wire-based and a wireless connection. Functional units can be implemented by dedicated hardware, e.g., processor, firmware or by software, and/or by a combination of dedicated hardware and firmware and software. It is further noted that each functional unit described for an apparatus can perform a functional step of the related method. In the same way, each functional step described for a method can be performed in a functional unit of the related apparatus.

AI based tools are applied to a large variety of machines, devices or other kind of technical systems to detect anomalies, predict maintenance works, monitor quality of manufactured products or to detect objects. These AI based tools, e.g., an analysis model, are in most cases a black box which receives the collected input data and outputs a prediction. The input data varies over time caused by the operation mode or degradation of the machine itself but also caused by degradation of the data as such. In the latter case, the analysis result will not reflect the real condition of the machine or product of the machine.

The degradation of the data can be caused by a degradation of the sensor recording the data or by a change of settings at the sensor. The degradation of the data can be caused by a change in the preprocessing of the recorded data in a data pre-processing unit. For instance, the measurement units of the sensor have been changed like a temperature first measured in degree Celsius is set to degree Fahrenheit or a weight measure is changed from gram to milligram, and similar. If the change in measurement units is not adapted during pre-processing, the analysis is mainly influenced by the degradation of the collected input. The analysis result may lead to improper measures, like change of settings in the machine or may lead to improper quality prediction of products manufactured by the machine or improper objects detected on image data.

Further on, the performance of the analysis model can degrade caused by data drift of the machine. The data drift may be caused by degradation or changed settings of the machine. The machine itself might not be degraded by these changes. Even in this case, the analysis results are no longer reliable, because the analysis model was not trained to these data shift. Here arises the problem to get aware of the data drift. If the reason for the data degradation is identified the machine model can be re-trained. To do such a re-training efficiently, not only the performance degradation of the analysis model has to be identified but also the feature in the collected datapoint which shows the drift. With the feature attribution to the performance the feature of the data can be identified and the training data used for re-training can be selected specifically covering the respective feature of the datapoint.

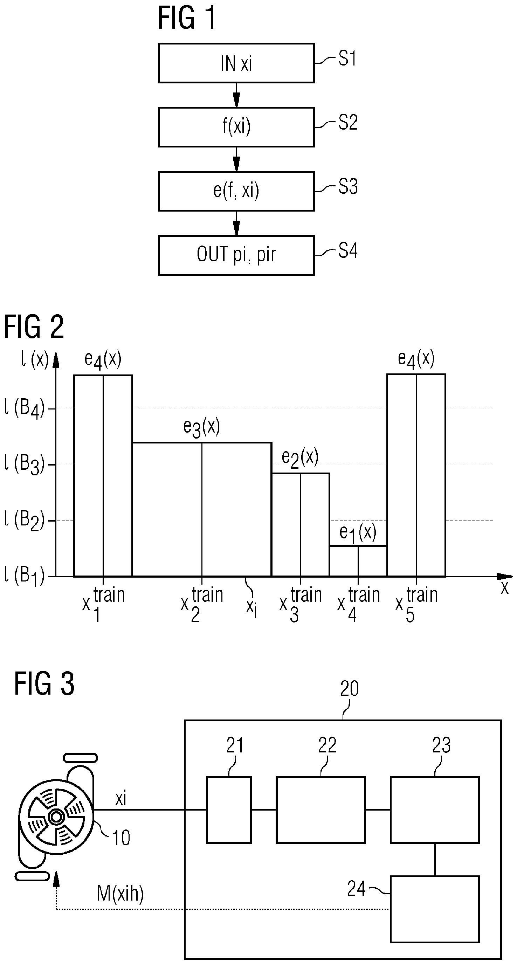

The proposed method solves the scenarios above and provides a reliable and processing-efficient approach to monitor the performance of the analysis model for sensor data collected at a machine. Details of the method are explained by means of the flowchart of Fig.1.

In a first step S1, at least one collected datapoint xi is received comprising multivariate sensor data collected at the machine or at a product of the machine. Each collected datapoint xi is structured as a multi-dimensional vector and each element of the vector represents a feature xir of the machine or a feature of a product of the machine or a feature of environment of the machine. If the multivariate sensor data comprises four features of the machine, like temperature, pressure, throughflow and velocity, each of the features is an element of the multi-dimensional vector. In case the multivariate sensor data is image data, each element of the multi-dimensional vector is one or a group of pixels of the image data.

In step S2 an analysis result is determined with respect to an analysis task by processing the collected datapoint xi by the analysis model f. The analysis model f is a machine learning model configured to perform a classification task or a regression task. Since the method outlined here is model agnostic it is applicable for all supervised classifier models or supervised regression models. The analysis model can be a Deep Neural Network DNN for a supervised approach, e.g., a DNN Classifier such as Long short-term memory LSTM, or a Recurrent Neural Network RNN. The analysis task is one of an anomaly detection, a predictive maintenance prediction, a quality monitoring, object detection and the like.

In step S3, the performance pi of the analysis model f is determined at the collected datapoint xi and a feature attribution pir of each of the features xir of the collected datapoint xi to the performance of the analysis model is determined by an explanation model e. The explanation model e comprises a set of loss functions trained for the analysis model f.

In step S4, the estimated performance pi of the analysis model f and the feature attribution pir of each of the features xir of the collected datapoint xi to the performance pi of the analysis model f are output, e.g., to a user interface, preferably a graphical user interface.

Each loss function l out of the set of loss functions estimates the performance pi of the analysis model f and estimates the feature attribution pir to the performance at a different subset of collected datapoints xi. Each of the trained loss functions is an additively or multiplicatively decomposable loss function. Examples for respective loss functions are mean squared error, cross-entropy loss. This structure of the loss functions enables a direct correlation and attribution of the loss to each of the elements of the datapoint and features of the machine respectively.

A linear regression model approximates each individual loss contributions with a weighted linear combination of the features of the input datapoint xi. The results of the linear regression model contribute to the additive loss function.

Each of the loss functions, i.e., more precisely each linear regression models, is trained to quantify the correspondence between the analysis result predicted by the analysis model f for a set of training datapoints and actual labels indicating the condition of the machine at the set of training datapoints.

A message, e.g., an alarm message or an instruction message, is generated if the performance l of the analysis model f at the collected datapoint xi is above a predefined threshold. The message comprises the collected datapoint xi, the performance pi of the analysis model f at collected datapoint, and the feature attribution pir of each of the features to the performance li. The instruction message is transferred to the machine, preferably to a sensor control unit of the machine, which performs the pre-processing of the sensor data and outputs the collected datapoint, or which controls the sensors collecting the data at the machine. Based on the instruction message the machine can adapt the pre-processing of the sensor data or the setting of the sensor. The alarm message is preferably transferred to a monitoring unit of the machine, e.g., to a monitoring panel indicating the most relevant features of the machine which causes the performance of the provided analysis result.

In a preferred embodiment at least one feature having a high feature attribution is determined out of the output feature attribution of each of the features of the collected datapoint. The at least one determined feature is output for calibration of the sensor collecting the determined feature. Additionally, the determined feature is output for indicating that the analysis model has to be re-trained, especially with training data comprising the determined feature and comprising values of the feature which are in the range of the collected datapoint for which high loss values were determined.

Fig. 2 shows an example of an explanation model e determined for an analysis model f which outputs an analysis result for a one-dimensional input datapoint $x_1^{train}, ..., x_5^{train}$. The explanation model comprises four loss functions $e_1, e_2, e_3, e_4$. Each loss function $e_1, ..., e_4$, was approximated by a linear regression model. Each of the regression models is trained by a subset of pairs $B_1, ..., B_4$, each pair comprising calculated loss attributions l of a training datapoint and the respective datapoint. The loss contribution **f** is given by a difference between analysis result f($x^{train}$) output for a training datapoint $x^{train}$ by the analysis model and a label indicating the true condition of the monitored machine. Each of the loss functions $e_1, e_2, e_3, e_4$ covers a different range of loss $\ell(B_4)$ given by the respective subset of pairs $B_1, ..., B_4$.

The performance of a collected datapoint $x_i$, which is one-dimensional and representing one feature, is thus provided by the loss function $e_3$ which was trained by the subset of pairs $B_3$ comprising a pair with $x_2^{train}$, which is close to $x_i$. Thus, the estimated performance of the analysis model at the collected datapoint $x_i$ is in range given by $\ell(B_3)$.

The invention further comprises a computer program product directly loadable into the internal memory of a digital computer, comprising software code portions for performing the steps of the method as described above when said product is run on said digital computer.

An embodiment of a monitoring apparatus 20 configured to execute the described method is depicted in Fig. 3 and describe below. The monitoring apparatus 20 is configured to monitor a performance of an AI based analysis model. The analysis model is applied perform a classification task or a regression task for collected datapoints collected by sensors at a machine 10. The monitoring apparatus 20 comprises an input interface 21, an estimator unit 22, an explanation unit 23, a user interface 24, and optionally a machine interface 25.

The input interface 21 is configured to receive at least one collected datapoint xi comprising multivariate sensor data collected at a machine 10 or at a product of the machine 10, each collected datapoint xi is structured as a multi-dimensional vector and each element of the vector representing a feature of the machine 10 or a feature of a product of the machine 10 or a feature of environment of the machine 10.

The analysis unit 22 is configured to determine an analysis result with respect to an analysis task by processing the collected datapoint xi by the analysis model. The analysis unit 22. The analysis task is preferably one of an anomaly detection, a predictive maintenance evaluation, a quality monitoring, or an object detection. Optionally the input interface 21 and analysis unit 22 can be implemented in a separate unit, e.g., in a separate machine monitoring apparatus and the collected datapoint xi and analysis result are forwarded from the separate machine monitoring apparatus to the performance estimation unit 23.

The performance estimation unit 23 is configured to estimate the performance pi of the analysis model f at the collected datapoint xi and a feature attribution pir of each of the features of the collected datapoint xi to the performance of the analysis model by an explanation model, wherein the explanation model comprises a set of loss function trained for the analysis model.

The output interface 24 is configured to output the estimated performance pi of the analysis model f and the feature attribution pir of each of the features of the collected datapoint to the performance of the analysis model. Optionally, the output interface 24 is configured to determine at least one feature which has a high feature attribution out of the output feature attribution of each of the features of the collected datapoint xi and the at least one determined feature xih is output for calibration of the sensor collecting the determined feature. The message can also indicate that a re-training of the analysis model is required. The included feature xir with the high feature attribution indicates, that the re-training requires training datapoints for this feature xir. The output interface 24 generates an alarm message M containing the respective feature xih which has a high feature attribution.

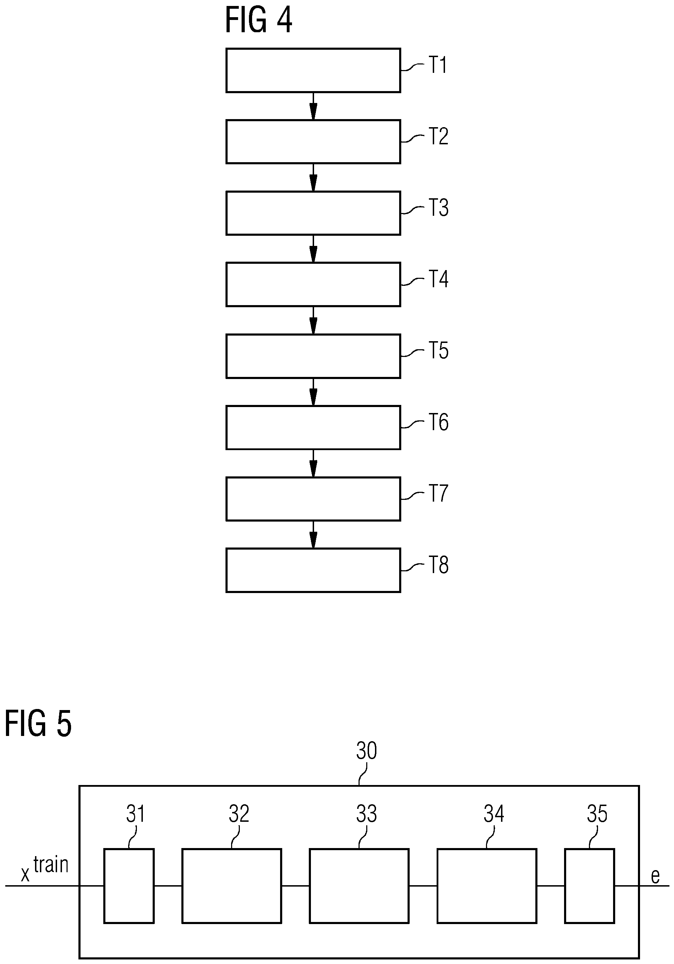

A method for training the explanation model e which estimates a performance of an analysis model f mentioned above is described in more detail based on the flow diagram shown in Fig. 4.

In a first step T1, a set of labelled training data is received. Each labelled training data comprises a training datapoint and a label assigned to the training data point. Further on, the analysis model f for which the explanation model e shall be trained is received.

In step T2, for each of the training datapoints, an analysis result is determined by processing the training datapoints by the analysis model f. In step T3, for each of the training datapoints, all loss attributions for each feature of the training datapoint are calculated by inputting the determined analysis result and the label of the training datapoint in a loss function. For each of the training datapoints, a pair is built comprising the calculated loss attributions of the training datapoint and the respecting training datapoint, see step T4. Subsequently the pairs are ordered according to ascending values of the loss attribution in an ordered set $S^O$ of pairs, see step T5. The ordered set $S^O$ of pairs are divided into subsets $S^B$ of pairs, wherein all loss attributions contained in an actual subset are smaller than the loss attributions contained in the subsequent subset, see T6. Each subset $S^B$ of pairs comprises at least more pairs than the number of features of the training data point.

Now, see step T7, a loss function $e_q$ is trained for each subset $S^B$ of pairs. Each of the loss functions $e_q$ is an additively or multiplicatively decomposable loss function. A linear regression model approximates individual loss contributions with a weighted linear combination of the features of an input training datapoint. The results of a linear regression model contribute to the loss function. Finally, see T8 the trained explanation model **e** is output comprising the trained loss functions $e_q$ for each subset of pairs $S^B$.

Fig. 5 depicts a training apparatus 30 for training the explanation model **e** which estimates a performance of an analysis model f. The training apparatus 30 comprises an input interface 31, an analysis unit 32, a processing unit 33, a training unit 34 and an output interface 35.

The input interface 31 is configured to receive a set of labelled training data $x^{train}$ each labelled training data comprising a training datapoint and a label assigned to the training data point and the analysis model f. The analysis unit 32 is configured to determine, for each of the training datapoints, an analysis result by processing the training datapoints by the analysis model f.

The processing unit 33 is configured to calculate, for each of the training datapoints, all loss attributions for each feature of the training datapoint by inputting the determined analysis result and the label of the training datapoint in a loss function. The processing unit 33 is configured to build a pair, for each of the training datapoints, comprising the calculated loss attributions of the training datapoint and the respecting training datapoint. The processing unit 33 is configured to order the pairs according to ascending values of the loss attribution in an ordered set of pairs. The processing unit 33 is configured to divide the ordered set of pairs into subsets of pairs, wherein all loss attributions contained in an actual subset are smaller than the loss attributions contained in the subsequent subset.

The training unit 34 is configured to train a loss function for each subset of pairs on the training datapoints and loss contributions contained in the subset of pairs. The output interface 35 is configured to output the trained explanation model **e** comprising the trained loss functions for each subset of pairs.

In the following a more details on the theoretical setup are provided.

Given input data $x_i \in \mathbb{R}^k, i = 1, \ldots, n$ and ground truth labels $y_i \in \mathbb{R}^p$ a machine learning model **f(x_i)** provides predictions $\hat{y}_i \in \mathbb{R}^p$ which either represent a regression problem with **p = 1** or a classification problem with **p > 1** and $\hat{y}_{i,j}$ **E (0,1),j = 1, ..., p** with $\Sigma_j \hat{y}_{i,j}$ **= 1**. Hence, the framework considers all standard supervised machine learning approaches.

It is further assumed that a loss function $\ell(y, \hat{y}) = \ell(y, f(x)) \in \mathbb{R}$ exists, that quantifies the correspondence between the prediction and the actual labels. Note that for any standard machine learning problem such a function exists anyhow. Furthermore, it is assumed that the loss function, which is defined on a full vector of labels **y = (y_1, ..., y_n)** and predictions **ŷ = (ŷ_1, ..., ŷ_n)** can be decomposed into individual contributions, i.e., **$\ell$(y,ŷ) = q({$\ell_i$(y_i,ŷ_i)}_{i=1,...,n})**, where **q** represents some kind of additive or multiplicative aggregation measure.

This setup is motivated by following considerations. There exists a tight relationship between a prediction and the loss function. This is illustrated with a linear regression model, such that

$$f(x_i) = \hat{y}_i = \beta_0 + \sum_{r=1,\ldots,k} \beta_r x_{r,i}.$$

The loss function is for instance the mean squared error such that

$$l(y, \hat{y}) = \frac{1}{n}\sum_{i=1,\ldots,n}(y_i - \hat{y}_i)^2.$$

Hence, the contribution of an individual instance to the loss function is given by

$$\ell_i(y_i, \hat{y}_i) =: \ell_i = \frac{1}{n}(y_i - \hat{y}_i)^2.$$

Therefore, the feature contributions to the loss can be expressed as follows

$$\ell_i = \frac{1}{n}\left(y_i - \beta_0 - \sum_{r=1,\ldots,k} \beta_r x_{r,i}\right)^2.$$

The derivative with respect to individual inputs can be directly expressed by

$$\frac{\partial l_i}{\partial x_{r,i}} = \frac{2}{n}\left(y_i - \beta_0 - \sum_{r=1,\ldots,k} \beta_r x_{r,i}\right)\beta_r$$

While this works for all gradient-based methods and mostly is also available because these derivations are needed for the training process, it is not indicative for the contribution of individual features since it also involves all other features. Furthermore, interpretations in terms of derivatives are often hard and inconclusive. Lastly, this is only a highly stylized and simplified case to give an example why feature attribution to the loss is hard although there exists a tight mathematical connection between prediction, features, and loss.

Given the difficulties outlined above, the following setting is proposed.

Additive feature attribution to the loss is achieved by defining a linear explanation model for the loss

$$e(x_i) = \zeta_{i,0} + \sum_{r=1,\ldots,k} \zeta_{i,r} x_{r,i} \approx \ell_i \quad (1).$$

Fitting, i.e., training this explanation model, essentially only requires approximating the individual loss contributions $l_i$ with a weighted linear combination or the input features $x_i$, being a linear regression model $e(x_i)$.

The caveat is however that it would be necessary to fit one regression model per datapoint which is not possible and would require huge processing capacity. Hence a sampling strategy is proposed which is outlined in the algorithmic description below.

The main assumption is, that some regions in the dataspace are more harmful to the loss than others. Thus, one can directly quantify this approach using the following routine:

a. Predict value $\hat{y}$, based on the data $x$ via $f(x) = \hat{y}$

b. Calculate all loss attributions and build pairs with the original input data $S = \{(\ell_1, x_1) ..., (\ell_n, x_n)\}$ which allows to connect loss contributions and input data.

c. Order the set $S$ according to ascending values of $\ell_i$ to obtain an ordered set $S° = \{S_1, ..., S_n\}$ with $l_m \in S_t < l_n \in S_{t+1} \forall t = 1, ..., n.$

d. Bin, i.e., group, the set $S$ in $s$ equidistant subsets $B$ such that each subset contains at least $k + 1$ loss contribution $\ell_i$ and data inputs $x_i$ for identification reasons. A linear regression model needs at least as many datapoints as it has parameters. I.e., $S^B = \{B_1, ..., B_s\}$ with $|B_q| > k + 1$ and $B_q = \{S_{q1}, ..., S_{qp}\}$ with all loss contributions contained in $B_q$ being smaller than the loss contributions contained in $B_{q+1}$.

e. Fit, i.e., train $s$ linear regression models on the input data and loss contributions within each subset $Bq.$

This approach will result in $s$ linear regression models with $s$ sets of $k + 1$ parameters. E.g.,

$$e_q(x_i) = \zeta_{i,0} + \sum_{r=1,..,k} \zeta_{q,i,r} x_{q_{r,i}} \; for \; q = 1, ..., s \; and \; x_q \in B_q \,.$$

Each parameter input combination $\zeta_{q,i,r} x_{q_{r,i}}$ can be interpreted as the additive contribution of feature $r$ to the loss for data instance $i$ within the respective subset $q$ of pairs, i.e., for different regions of the data guided by the loss. This sufficiently allows to approximate equation (1).

Performing this approach and routine for labelled training data of a machine which shall be analyzed by the analysis model f results in an explanation model $e$ comprising of a set of s explanation models $e_q$. The set of explanation models $e_q$ approximates the performance of the analysis model f and approximates the feature attribution to the performance of each feature of any collected datapoint. Thus, it can be applied for collected datapoints recorded during operation of the machine.

The proposed method for training the explanation model approximates the performance and their attribution to individual features in a model-agnostic way, i.e., for any regression model or classification model by the usage of multiple linear regression models. The choice of explanation models as well as the ability to parallelize the computation for multiple subsets of pairs simultaneously makes the training of the explanation model highly efficient from a computational perspective. It also allows to give a general prediction of the model performance within the subsets which can be decomposed to the level of individual data instances and features.

This explanation model can be used to monitor the performance of the model f when applied to a machine. The described approach can also be used in generation of new analysis models for model-engineering and fine tuning of the analysis model to make the analysis model more robust. It also has applications for deployment and monitoring as it identifies data regions where individual features potentially contribute high to the loss of the model, knowledge that can be integrated into robustness and fallback procedures for deployment.

It is to be understood that the above description of examples is intended to be illustrative and that the illustrated components are susceptible to various modifications. For example, the illustrated concepts could be applied for different technical systems and especially for different sub-types of the respective technical system with only minor adaptions.

*Independent of the grammatical term usage, individuals with male, female or other gender identities are included within the term.*

**Claims**

1. Computer-implemented method for monitoring a performance of an AI based analysis model, comprising

    - receiving (S1) at least one collected datapoint (xi) comprising multivariate sensor data collected at the machine (10) or at a product of the machine (10) or an environment of the machine (10), each collected datapoint (xi) is structured as a multi-dimensional vector and each element of the vector representing a feature of the machine (10) or a feature of a product of the machine (10) or a feature of environment of the machine (10),
- determining (S2) an analysis result with respect to an analysis task by processing the collected datapoint (xi) by the analysis model (f),
- estimating (S3) the performance of the analysis model (f) at the collected datapoint (xi) and a feature attribution of each of the features of the collected datapoint (xi) to the performance of the analysis model (f) by an explanation model (e), wherein the explanation model (e) comprises a set of loss functions trained for the analysis model (f),
- outputting (S4) the estimated performance (pi) of the analysis model (f) and the feature attribution (pir) of each of the features of the collected datapoint (xi) to the performance of the analysis model (f).

2. Computer-implemented method according claim 1, wherein each loss function out of the set of loss functions estimates the performance of the analysis model (f) and the feature attribution to the performance at a different subset of collected datapoints (xi).

3. Computer-implemented method according claim 1 or 2, wherein each of the trained loss functions is an additively or multiplicatively decomposable loss function.

4. Computer-implemented method according claim 3, wherein a linear regression model approximates individual loss contributions with a weighted linear combination of the features of the input datapoint (xi), and results of the linear regression model contribute to the additive loss function.

5. Computer-implemented method according to any of the preceding claims, wherein
each of the loss functions is trained to quantify the correspondence between the analysis result predicted by the analysis model (f) for a set of training datapoints and actual labels indicating the condition of the machine (10) at the set of training datapoints.

6. Computer-implemented method according to any of the preceding claims, wherein a message (M) is generated if the performance of the analysis model (f) is above a predefined threshold.

7. Computer-implemented method according to any of the preceding claims, wherein at least one feature having a high feature attribution is determined out of the output feature attribution of each of the features of the collected datapoint (xi) and the at least one determined feature is output for calibration of the sensor collecting the determined feature.

8. Computer-implemented method according to any of the preceding claims, wherein at least one feature having a high feature attribution is determined out of the output feature attributions of each of the features of the collected datapoint (xi) and output for indicating a re-training of the analysis model (f).

9. Computer-implemented method for training an explanation model which estimates a performance of an analysis model (f), comprising the steps

- receiving (T1) a set of labelled training data, each labelled training data comprising a training datapoint and a label assigned to the training data point and the analysis model (f),
- determining (T2), for each of the training datapoints, an analysis result by processing the training datapoints by the analysis model (f),
- calculating (T3), for each of the training datapoints, all loss attributions for each feature of the training datapoint by inputting the determined analysis result and the label of the training datapoint in a loss function,
- building a pair (T4), for each of the training datapoints, comprising the calculated loss attributions of the training datapoint and the respecting training datapoint,
- ordering (T5) the pairs according to ascending values of the loss attribution in an ordered set of pairs,
- dividing (T6) the ordered set of pairs into subsets of pairs, wherein all loss attributions contained in an actual subset are smaller than the loss attributions contained in the subsequent subset,
- training (T7) a loss function for each subset of pairs contained in the subset of pairs, and
- outputting (T8) the trained explanation model (e) comprising the trained loss functions for each subset of pairs.

10. Computer-implemented method according to claim 9, wherein each of the loss functions is an additively or multiplicatively decomposable loss function, and/or
wherein results of a linear regression model contribute to the loss function, and the linear regression model approximates individual loss contributions with a weighted linear combination of the features of an input training datapoint.

11. Computer-implemented method according to claim 9 or 10, wherein each subset of pairs comprises at least more pairs than the number of features of the training data point.

12. Monitoring apparatus (20) for monitoring a performance of an AI based analysis model (f), comprising

   - an input interface (21) configured to receive at least one collected datapoint (xi) comprising multivariate sensor data collected at the machine (10) or at a product of the machine (10) or an environment of the machine (10), each collected datapoint (xi) is structured as a multi-dimensional vector and each element of the vector representing a feature of the machine (10) or a feature of a product of the machine (10) or a feature of environment of the machine (10),
   - an analysis unit (22) configured to determine an analysis result (S2) with respect to an analysis task by processing the collected datapoint (xi) by the analysis model (f),
   - a performance estimation unit (23) configured to estimate the performance of the analysis model (f) at the collected datapoint and a feature attribution of each of the features of the collected datapoint (xi) to the performance of the analysis model (f) by an explanation model, wherein the explanation model (e) comprises a set of loss functions trained for the analysis model (f), and
   - an output interface (24) configured to output the estimated performance of the analysis model (f) and the feature attribution of each of the features of the collected datapoint (xi) to the performance of the analysis model (f).

13. Training apparatus (30) for training an explanation model (e) which estimates a performance of an analysis model (f), comprising

   - an input interface (31) configured to receive a set of labelled training data, each labelled training data comprising a training datapoint and a label assigned to the training data point and the analysis model (f),
   - an analysis unit (32) configured to determine, for each of the training datapoints, an analysis result by processing the training datapoints by the analysis model (f),
   - a processing unit (33) configured
   to calculate, for each of the training datapoints, all loss attributions for each feature of the training datapoint by inputting the determined analysis result and the label of the training datapoint in a loss function,
   to build a pair, for each of the training datapoints, comprising the calculated loss attributions of the training datapoint and the respecting training datapoint,
   to order the pairs according to ascending values of the loss attribution in an ordered set of pairs,
   to divide the ordered set of pairs into subsets of pairs, wherein all loss attributions contained in an actual subset are smaller than the loss attributions contained in the subsequent subset,
   a training unit (34) configured to train a loss function for each subset of pairs on the training datapoints and loss contributions contained in the subset of pairs, and
   an output interface (35) configured to output the trained explanation model comprising the trained loss functions for each subset of pairs.

14. A computer program product directly loadable into the internal memory of a digital computer, comprising software code portions for performing the steps of claims 1-8 when said product is run on said digital computer.

15. A computer program product directly loadable into the internal memory of a digital computer, comprising software code portions for performing the steps of claims 9-11 when said product is run on said digital computer.

## FIG 1

| | |
|---|---|
| IN xi | S1 |
| f(xi) | S2 |
| e(f, xi) | S3 |
| OUT pi, pir | S4 |

## FIG 2

## FIG 3

## FIG 4

```
┌─────────────────────┐
│                     │── T1
└─────────────────────┘
          │
          ▼
┌─────────────────────┐
│                     │── T2
└─────────────────────┘
          │
          ▼
┌─────────────────────┐
│                     │── T3
└─────────────────────┘
          │
          ▼
┌─────────────────────┐
│                     │── T4
└─────────────────────┘
          │
          ▼
┌─────────────────────┐
│                     │── T5
└─────────────────────┘
          │
          ▼
┌─────────────────────┐
│                     │── T6
└─────────────────────┘
          │
          ▼
┌─────────────────────┐
│                     │── T7
└─────────────────────┘
          │
          ▼
┌─────────────────────┐
│                     │── T8
└─────────────────────┘
```

## FIG 5

$x^{train}$ ── 31 ── 32 ── 33 ── 34 ── 35 ── e

30

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

EP 23 19 3952

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ASUTKAR SUPRIYA ET AL: "An explainable unsupervised learning framework for scalable machine fault detection in Industry 4.0", MEASUREMENT SCIENCE AND TECHNOLOGY., [Online] vol. 34, no. 10, 20 July 2023 (2023-07-20) , XP093133921, GB ISSN: 0957-0233, DOI: 10.1088/1361-6501/ace640 Retrieved from the Internet: URL:https://iopscience.iop.org/article/10.1088/1361-6501/ace640/meta> [retrieved on 2024-02-22] * the whole document * ----- | 1-8,12, 14 | INV. G06N3/09 G06N20/00 |

**TECHNICAL FIELDS SEARCHED (IPC)**

G06N

### INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

**see sheet C**

| Place of search | Date of completion of the search | Examiner |
|---|---|---|
| The Hague | 22 February 2024 | Ntarlagiannis, V |

EPO FORM 1503 03.82 (P04E07)

Europäisches
Patentamt

European
Patent Office

Office européen
des brevets

INCOMPLETE SEARCH
SHEET C

Application Number

EP 23 19 3952

Claim(s) completely searchable:
        1-8, 12, 14

Claim(s) not searched:
        9-11, 13, 15

Reason for the limitation of the search:

In response to the invitation under Rule 62a(1) EPC, the applicant
responded with paying an additional search fee and requesting to search
all the claims.
However, in response to the invitation under Rule 62a(1) EPC, it is not
procedurally possible to pay an additional search fee and requesting to
search all the claims.
Hence, on the one hand, refunding of the additional search fee is
expected to take place by the formalities officers.
On the other hand, in view of the lack of any selection by the applicant
of which set of claims to be search, the search division performed a
partial search report based on claims 1-8, 12, 14, as filed on 29.08.2023
and as it has been communicated to the applicant on 09-02-2024.
The reasoning for this selection is repeated below.
The present set of claims 1-15 contains two independent method claims
(i.e. claims 1, 9), two corresponding independent apparatus claims (i.e.
claims 12, 13) and two corresponding independent product claims (i.e.
claims 14, 15).
Under Article 84 in combination with Rule 43(2) EPC, an application may
contain more than one independent claim in a particular category only if
the subject-matter claimed falls within one or more of the exceptional
situations set out in paragraph (a), (b) or (c) of Rule 43(2) EPC, which
is not the case in the present application.
Independent method claims 1, 9 relate neither to inter-related products -
exception (a) (in the sense of plug-and-socket), nor to different uses of
a product or apparatus - exception (b) (no use is claimed) (see
Guidelines F-IV 3.2 and 3.3). Regarding exception (c) it is noted that
claims 1, 9 do not relate to an exceptional case of "alternative"
solutions in the sense of mutually exclusive possibilities. Therefore,
claims 1, 9 cannot be considered as alternative solutions.
Similarly, the corresponding independent apparatus claims 12, 13 (as well
as two corresponding independent product claims 14, 15) relate neither to
inter-related products - exception (a) (in the sense of plug-and-socket),
nor to different uses of a product or apparatus - exception (b) (no use
is claimed) (see Guidelines F-IV 3.2 and 3.3). Regarding exception (c) it
is noted that claims 12, 13 (and claims 14, 15) do not relate to an
exceptional case of "alternative" solutions in the sense of mutually
exclusive possibilities. Therefore, claims 12, 13 (and claims 14, 15)
cannot be considered as alternative solutions.
The subject-matter of claims 9-11, 13, 15 may be made the subject of one
or more  divisional applications. The divisional applications must be
filed with the European Patent Office in Munich, The Hague or Berlin and
shall be in the language of the proceedings relating to the present
application (cf. Article 76(1) and Rule 36(2) EPC). The time limit for
filing divisional applications (Rule 36(1) EPC) must be observed.